Europäisches Patentamt

European Patent Office

Office européen des brevets

(19)

(11) Numéro de publication : **0 125 178
B1**

# (12) FASCICULE DE BREVET EUROPÉEN

(45) Date de publication du fascicule du brevet :
25.03.87

(21) Numéro de dépôt : 84400895.3

(22) Date de dépôt : 03.05.84

(51) Int. Cl.⁴ : **F 02 F   3/12, F 16 J   1/22**

(54) **Piston en matériaux réfractaires, notamment pour moteurs à allumage par compression.**

(30) Priorité : 05.05.83 FR 8307524

(43) Date de publication de la demande :
14.11.84 Bulletin 84/46

(45) Mention de la délivrance du brevet :
25.03.87 Bulletin 87/13

(84) Etats contractants désignés :
DE GB IT NL SE

(56) Documents cités :
EP-A- 0 067 327
EP-A- 0 069 578
DE-A- 3 200 549
US-A-   746 818
US-A- 1 788 566

(73) Titulaire : REGIE NATIONALE DES USINES RENAULT
*Boîte postale 103 8-10 avenue Emile Zola*
F-92109 Boulogne-Billancourt (FR)

(72) Inventeur : Castarede, Armand
3, Allée de Woluwé Saint-Lambert
F-92360 Meudon La Forêt (FR)

(74) Mandataire : Réal, Jacques et al
Régie Nationale des Usines Renault SCE 0804
F-92109 Boulogne Billancourt Cedex (FR)

Jouve, 18, rue St-Denis, 75001 Paris, France

## Description

La présente invention se rapporte à un piston en matériaux réfractaires utilisé dans un moteur à combustion interne et plus particulièrement dans un moteur à allumage par compression.

Dans la technique des moteurs à allumage par compression, il a été proposé d'utiliser des chambres de combustion isolées pour augmenter le rendement et pour diminuer la pollution. Par ailleurs, la température disponible pour entraîner la turbine d'un moteur à turbocompresseur est considérablement augmentée. Une solution connue consiste à pulvériser sur les surfaces de la chambre de combustion un matériau isolant à base de céramique.

Une autre solution courante est de réaliser au moins un composant qui délimite la chambre de combustion, en un matériau isolant. En variante, on peut noyer un insert de céramique dans l'un de ces composants ou rajouter un écran thermique.

Dans la première solution, les difficultés résident dans le maintien de l'intégrité de la couche isolante, à cause des contraintes du cycle de combustion et par suite des problèmes de dilatation thermique.

Le document EP-A-69 578 décrit un piston pour un moteur à combustion interne comportant une tête entièrement en matériau réfractaire, pourvue d'une cuvette de combustion, une jupe pourvue d'un logement de rotule pour un pied de bielle, et leurs moyens de fixation mutuels.

Avec ces solutions, on se heurte à des difficultés engendrées par des gradients de température considérables existant entre les matériaux. Des contraintes thermiques excessives et des déformations peuvent en résulter, lorsqu'il s'agit d'un matériau n'ayant pas un coefficient de dilatation thermique extrêmement faible.

Les problèmes ci-dessus sont résolus par l'invention dont l'objet est un piston en matériaux réfractaires, notamment pour un moteur à allumage par compression, du type comprenant une tête, une jupe et leurs moyens de fixation mutuels.

L'invention propose un piston plus fiable, plus léger et plus adiabatique que ceux traditionnellement élaborés en alliage d'aluminium ou en fonte. Ces trois propriétés concourent à l'amélioration des rendements thermodynamique et mécanique des moteurs à allumage par compression, et à la diminution des niveaux vibratoire et sonore de ces derniers.

Suivant une particularité de l'invention, cette jupe entièrement en matériau réfractaire comporte deux moitiés, qui présentent chacune deux portions semi-cylindriques supérieure et inférieure entre lesquelles sont disposées des nervures verticales, perpendiculaires au plan de montage de ces deux moitiés de jupe, qui comportent une cavité semi-sphérique et qui forment après assemblage, suivant ce plan contenant l'axe longitudinal du piston, un logement de rotule pour un pied de bielle. Chaque moitié de jupe présente une structure très rigide due au nervurage, et simple, ce qui permet une élaboration facile. Le remplacement du traditionnel axe de piston par une rotule autorise l'emploi de matériaux fragiles, allège l'ensemble des masses en mouvement alternatif, et est particulièrement bien adapté au fonctionnement des moteurs à deux temps.

Suivant une autre particularité de l'invention, cette tête de piston entièrement en matériau réfractaire comporte une cuvette de combustion ainsi que des évidements répartis autour de l'axe longitudinal du piston et débouchant sur la face inférieure de raccordement à la jupe. Cette tête présente une structure simple, légère et ses évidements renforcent l'isolation thermique nécessaire entre celle-ci et la jupe de piston, déjà favorisée par l'emploi d'un matériau réfractaire.

D'autres particularités et avantages de l'invention ressortiront de la description qui suit, d'un mode de réalisation préféré, donnée à un titre d'exemple nullement limitatif, en référence aux dessins annexés dans lesquels :

la figure 1 est une vue en coupe longitudinale et axiale d'un piston conforme à l'invention ;

la figure 2 est une vue en coupe suivant la ligne 2-2 de la figure 1 ;

la figure 3 est une vue en coupe suivant la ligne 3-3 de la figure 1, et

la figure 4 est une vue en coupe suivant la ligne 4-4 de la figure 1.

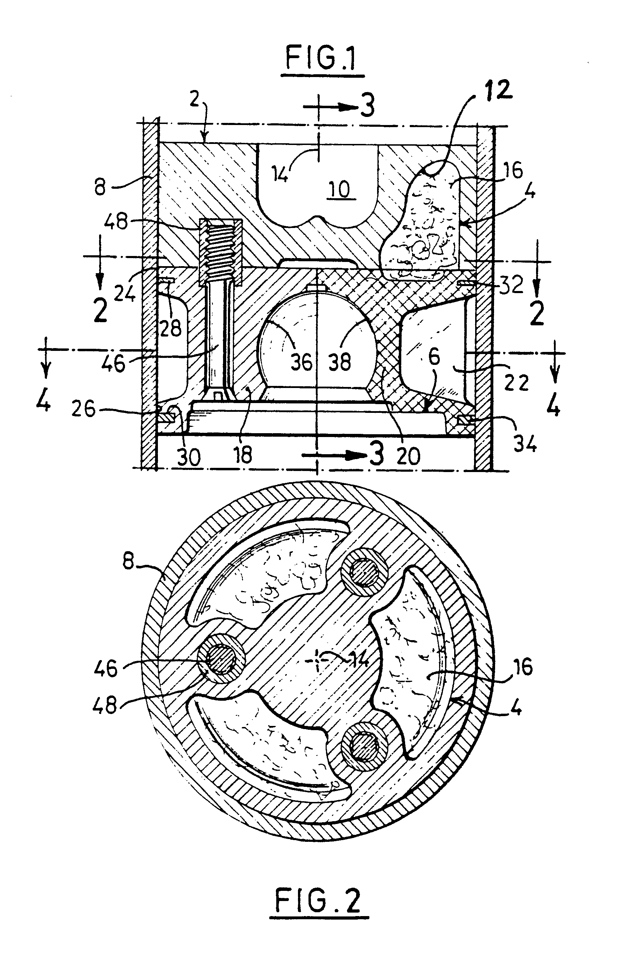

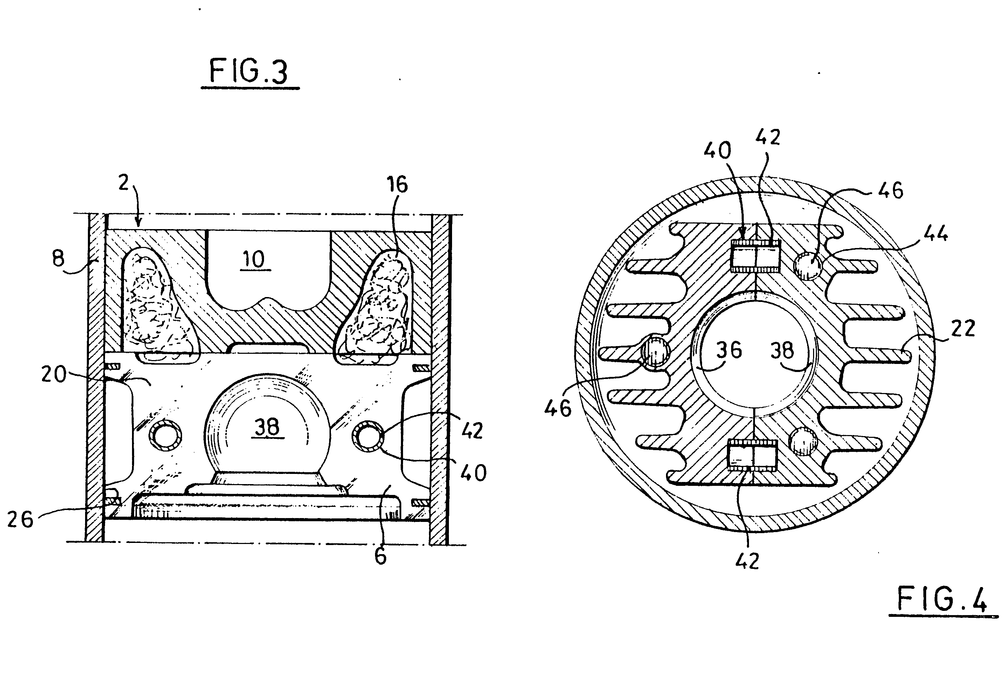

Les figures 1 à 4 montrent un piston 2 pour un moteur à allumage par compression et à injection directe, qui comprend une tête 4 et une jupe 6. Ce piston coulisse alternativement dans une chemise 8 et comporte une cuvette de combustion conventionnelle 10 ainsi que trois évidements 12 régulièrement répartis autour de l'axe longitudinal 14 du piston et de la cuvette 10. Ces évidements 12 débouchent sur la face inférieure de raccordement à la jupe 6 et contiennent un produit isolant 16 tel que de la laine de verre. La jupe 6 est constituée par deux moitiés 18 et 20 dont l'assemblage s'effectue suivant un plan contenant l'axe longitudinal 14 du piston 2. Chacune de ces moitiés 18 et 20 présente des nervures 22 verticales, perpendiculaires au plan de montage des deux parties de jupe 18 et 20 et situées entre deux portions semi-cylindriques supérieure 24 et inférieure 26. Ces portions semi-cylindriques 24 et 26 présentent respectivement des gorges 28 et 30 qui reçoivent respectivement un segment d'étanchéité 32 et un segment râcleur 34.

Les deux moitiés de jupe 18 et 20 comportent des cavités semi-sphériques 36 et 38 respectives qui forment, après assemblage, un logement de rotule pour un pied de bielle non représenté. Chacune de ces moitiés est pourvue de deux trous borgnes 40 dont les axes sont perpendiculaires au plan d'assemblage de celles-ci et symétriques par rapport à l'axe longitudinal 14 du piston 2. Ces trous 40 sont destinés à recevoir deux bagues de centrage rectifiées 42.

Trois alésages 44 d'axes parallèles à l'axe longitudinal 14 du piston 2 et régulièrement répartis à 120° autour de cet axe traversent la jupe 6 (un et deux respectivement pour les parties de jupe 18 et 20). Ces alésages reçoivent chacun une vis de fixation 46 et un insert taraudé 48 formant écrou et bague de centrage de la jupe sur la tête 4, dans laquelle il est noyé. Le piston 2 précédemment décrit et réalisé en matériaux réfractaires, tels que les différentes céramiques, peut fonctionner à des températures très élevées pour améliorer la combustion et les rendements thermodynamique et mécanique du moteur.

L'emploi de ces matériaux, en fonction de leurs caractéristiques physico-mécaniques et de leur mode d'élaboration, conduit à concevoir le piston sous une forme inhabituelle.

En effet, la tête 4 du piston 2 comporte des évidements 12 en plus de la chambre de combustion 10 dans le cas d'un moteur à injection directe. La jupe 6 assemblée en deux moitiés nervurées 18 et 20 coiffe un pied de bielle sphérique et reçoit une segmentation appropriée à la chemise 8 ou cylindre dans laquelle elle doit se mouvoir.

Le matériau réfractaire employé pour la tête devra présenter de très faibles coefficients de dilatation et de conduction thermiques ainsi qu'une bonne résistance à la compression, par exemple le sialon.

Le matériau réfractaire employé pour une jupe devra présenter des caractéristiques semblables associées à une bonne résistance à la flexion et à un faible coefficient de frottement, par exemple le nitrure de silicium.

Pour qu'un piston ainsi constitué fonctionne convenablement, la chemise 8 ou cylindre dans laquelle celui-ci se déplace doit également être en matériau réfractaire, par exemple en carbure de silicium.

Le jeu existant entre la tête de piston 4 et la chemise 8 ou cylindre est de ce fait minimisé et le plus constant possible durant les différentes phases de fonctionnement du moteur.

Cette tête 4 peut comporter des gorges de détente destinées à améliorer son étanchéité aux gaz de combustion. Avant son assemblage sur la jupe de piston 6, les évidements 12 dont il est pourvu peuvent être garnis d'un produit isolant, par exemple de la laine de verre, afin d'augmenter l'effet l'isolation thermique que procure l'air emprisonné entre cette tête et cette jupe.

La jupe 6 comme la tête 4 doit satisfaire aux mêmes critères de dilatation thermique vis-à-vis de la chemise 8 ou du cylindre. Sa portance est réduite le plus possible et, si le coefficient de frottement ainsi que la lubrification l'autorisent, la segmentation 28, 30, 32 et 34 sera supprimée.

Les parties constitutives (tête et jupe) du piston 2 présentent un mode d'élaboration approprié aux matériaux réfractaires employés. Elles forment un ensemble léger, particulièrement adapté aux moteurs diesel à injection directe (chambre de combustion dans le piston).

La tête 4 dont la température est élevée facilite la combustion et les départs à froid.

Cette tête 4 reçoit les inserts taraudés 48 qui servent à son centrage sur la jupe 6 et à sa liaison par la vis de fixation 46 sur cette dernière. La jupe 6, composée des deux moitiés 18 et 20 centrées entre elles, forme, après assemblage de ces dernières, une cavité sphérique 36, 38 dans laquelle tourillonne un pied de bielle non représenté. Une alimentation d'huile sous pression en provenance de la bielle en assure le bon fonctionnement.

La jupe 6 ainsi définie peut présenter une faible hauteur grâce aux qualités de frottement des matériaux réfractaires employés et à une lubrification appropriée. Son basculement et les « claquages à froid » peuvent être minimisés par le jeu de fonctionnement réduit qui est rendu possible par l'emploi d'une chemise 8 ou d'un cylindre en un matériau dont le coefficient de dilatation thermique est adapté à celui de la jupe 6. Bien entendu, dans le cas des moteurs fonctionnant suivant le cycle à deux temps et à balayage équicourant, la hauteur de la jupe 6 est conditionnée par la position des lumières.

Les deux segments que cette jupe comporte, dits d'étanchéité 32 et râcleur 34, peuvent être supprimés suivant les qualités des matériaux réfractaires employés pour réaliser l'ensemble constitué par la jupe 6, la chemise 8 ou le cylindre, et la tête 4.

**Revendications**

1. Piston (2) en matériaux réfractaires, notamment pour un moteur à allumage par compression, du type comprenant une tête (4) entièrement en matériau réfractaire, pourvue d'une cuvette de combustion (10), d'une jupe (6) pourvue d'un logement de rotule pour un pied de bielle, et leurs moyens de fixation mutuels (44, 46, 48), caractérisé en ce que cette jupe (6) entièrement en matériau réfractaire comporte deux moitiés (18, 20), qui présentent chacune deux portions semi-cylindriques supérieure (24) et inférieure (26) entre lesquelles sont disposées des nervures verticales (22), perpendiculaires au plan de montage de ces deux moitiés de jupe (18, 20), qui comportent une cavité semi-sphérique (36, 38), et qui forment, après assemblage suivant ce plan contenant l'axe longitudinal (14) du piston (2), ce logement de rotule pour un pied de bielle, et en ce que cette tête (4) comporte des évidements (12) répartis autour de l'axe longitudinal (14) du piston (2) et débouchant sur la face inférieure de raccordement à cette jupe (6).

2. Piston en matériaux réfractaires selon la revendication 1, caractérisé par des moyens de centrage (40, 42, 44, 48) entre les deux parties de jupe (18, 20) d'une part, et entre la tête (4) et la jupe (6) d'autre part.

3. Piston en matériaux réfractaires selon l'une quelconque des revendications 1 et 2, caractérisé en ce que les évidements (12) de la tête (4) sont garnis d'un matériau thermiquement isolant (16), notamment de laine de verre.

4. Piston en matériaux réfractaires selon l'une quelconque des revendications 1, 2 et 3, caractérisé en ce que la tête (4) est faite d'un matériau réfractaire présentant de très faibles coefficients de dilatation et de conduction thermique, et une bonne résistance à la compression, notamment une céramique comme le sialon.

5. Piston en matériaux réfractaires selon l'une quelconque des revendications 1 à 4, caractérisé en ce que la jupe (6) est faite d'un matériau réfractaire présentant de très faibles coefficients de dilatation et de conduction thermiques, une bonne résistance à la compression et à la flexion, et un faible coefficient de frottement, notamment une céramique comme le nitrure de silicium.

6. Piston en matériaux réfractaires selon l'une quelconque des revendications 1 à 5, caractérisé en ce que la jupe (6) présente une portance minimale assurée par au moins une surface cylindrique lisse (24, 26), dépourvue de gorge de segmentation.

7. Piston en matériaux réfractaires selon l'une quelconque des revendications 1 à 6, caractérisé en ce qu'il se déplace dans un cylindre ou chemise (8) également réfractaire, notamment en carbure de silicium.

## Claims

1. A piston (2) of refractory materials, in particular for a compression ignition engine, of the type comprising a head (4) which is entirely of refractory material and which is provided with a combustion bowl (10), a skirt (6) provided with a ball joint housing for a small end, and their mutual fixing means (44, 46, 48), characterised in that said skirt (6) which is entirely of refractory material comprises two halves (18, 20) which each have two semicylindrical portions, an upper portion (24) and a lower portion (26), between which are disposed vertical ribs (22) perpendicular to the plane of assembly of said two skirt halves (18, 20), which comprise a hemispherical cavity (36, 38) and which, after assembly in said plane which contains the longitudinal axis (14) of the piston (2), form said ball joint housing for a small end, and that said head (4) comprises cavities (12) which are distributed around the longitudinal axis (14) of the piston (2) and which open at the lower face for connection to said skirt (6).

2. A piston of refractory materials according to claim 1 characterised by centering means (40, 42, 44, 48) between the two skirt portions (18, 20) on the one hand and between the head (4) and the skirt (6) on the other hand.

3. A piston of refractory materials according to either one of claims 1 and 2 characterised in that the cavities (12) in the head (4) are lined with a thermally insulating material (16), in particular glass wool.

4. A piston of refractory materials according to any one of claims 1, 2 and 3 characterised in that the head (4) is made from a refractory material having very low coefficients of thermal conduction and expansion and good resistance to compression, in particular a ceramic material such as sialon.

5. A piston of refractory materials according to any one of claims 1 to 4 characterised in that the skirt (6) is made from a refractory material having very low coefficients of thermal conduction and expansion, good resistance to compression and bending and a low coefficient of friction, in particular a ceramic material such as silicon nitride.

6. A piston of refractory materials according to any one of claims 1 to 5 characterised in that the skirt (6) has a minimum load bearing area which is provided by at least one smooth cylindrical surface (24, 26) which is without a piston ring groove.

7. A piston of refractory materials according to any one of claims 1 to 6 characterised in that it moves in a cylinder or liner (8) which is also refractory, in particular of silicon carbide.

## Patentansprüche

1. Kolben (2) aus feuerfestem Material, insbesondere für Dieselbrennkraftmaschinen, mit einem Oberteil (4), das vollständig aus feuerfestem Material besteht und eine Brennkammer (10) aufweist und einen Schaft (6), der eine Gelenkaussparung für eine Pleuelstange aufweist und deren gegenseitige Befestigungsanordnungen (44, 46, 48) dadurch gekennzeichnet, daß der vollständig aus feuerfestem Material bestehende Schaft (6) zwei Hälften (18, 20) aufweist, deren jede einen oberen und unteren halbzylindrischen Abschnitt (24, 26) enthält, zwischen denen senkrechte Rippen (22) angeordnet sind, rechtwinlig zur Verbindungsebene der beiden Schafthälften (18, 20), die eine halbkreisförmige Aussparung (36, 38) aufweisen und die nach dem Zusammenbau entlang dieser Ebene, welche die Längsachse (14) des Kolbens (2) enthält, die Gelenkaussparung für die Pleuelstange bilden und daß das Oberteil (4) Aussparungen (12) aufweist, die um die Längsachse (14) des Kolbens verteilt sind und an der unteren Verbindungsfläche mit dem Schaft (6) münden.

2. Kolben aus feuerfestem Material nach Anspruch 1, dadurch gekennzeichnet, daß Zentrierungsanordnungen (40, 42, 44, 48) zwischen den Schaftabschnitten (18, 20) einerseits und zwischen dem Oberteil (4) und dem Schaft (6) andererseits vorgesehen sind.

3. Kolben aus feuerfestem Material nach einem der Ansprüche 1 und 2, dadurch gekennzeichnet, daß die Aussparungen (12) des Oberteils (4) mit einem thermisch isolierenden Material (16) insbesondere Glaswolle versehen sind.

4. Kolben aus feuerfestem Material nach einem der Ansprüche 1, 2 und 3, dadurch gekennzeichnet, daß das Oberteil (4) aus einem feuerfesten Material besteht, das sehr geringe Ausdehnungs-

und thermische Leitfähigkeitskoeffizienten aufweist, sowie eine gute Druckfestigkeit aufweist und insbesondere aus einem keramischen Werkstoff, wie z. B. Sialon besteht.

5. Kolben aus feuerfestem Material nach einem der Ansprüche 1 bis 4, dadurch gekennzeichnet, daß der Schaft (6) aus einem feuerfesten Material besteht, das sehr geringe Ausdehnungs- und thermische Leitfähigkeitskoeffizienten aufweist und einen hohen Druckwiderstand und Biegewiderstand aufweist sowie einen geringen Reibungskoeffizienten aufweist und insbesondere aus einem keramischen Werkstoff wie z. B. Siliziumnitrid besteht.

6. Kolben aus feuerfestem Material nach einem der Ansprüche 1 bis 5, dadurch gekennzeichnet, daß der Schaft (6) eine minimale Reibung aufweist infolge wenigstens einer glatten zylindrischen Oberfläche (24, 26) ohne kreisförmige Nuten.

7. Kolben aus feuerfestem Material nach einem der Ansprüche 1 bis 6, dadurch gekennzeichnet, daß er sich in einem Zylinder oder einer Buchse (8) bewegt, die ebenfalls feuerfest ist und insbesondere aus einem Siliziumkarbid besteht.

## FIG.1

## FIG.2

FIG.3

FIG.4